# FASCICULE DE BREVET EUROPEEN

(11) **EP 0 415 832 B1**
(45) Date de publication et mention de la délivrance du brevet: **30.03.1994**
(21) Numéro de dépôt: 90402358.7
(22) Date de dépôt: 24.08.1990
(51) Int. Cl.: A23C 19/05, A23C 19/028

(54) **Procédé de fabrication de fromage ou de spécialité fromagère**
Verfahren zur Herstellung von Käse oder Käsespezialität
Process for preparing cheese or cheese speciality

(30) Priorité: 29.08.1989 FR 8911347
(43) Date de publication de la demande: 06.03.1991
(73) Titulaire: BONGRAIN S.A., F-78280 Guyancourt (FR)
(72) Inventeur: Piliero, Roco, F-53200 Aze (FR); Meugniot, Nicolas, F-53260 Entrammes (FR)
(74) Mandataire: Derambure, Christian

(56) Documents cités:
- EP-A- 0 185 795
- FR-A- 800 529
- GB-A- 925 031
- JOURNAL OF FOOD SCIENCE, vol. 53, no. 6, novembre-décembre 1988, pages 1680-1683; M.A. CRADDOCK et al.: "Evaluation of alternative methods to increasecalcium retention in cottage cheese curd"
- FOOD SCIENCE & TECHNOLOGY ABSTRACTS, no.87-06-P0091 (87034132); A.A. EL-NESHAWY et al.: "An attempt to produce low fatCephatotyre (Ras) cheese of acceptable quality",& FOOD CHEMISTRY, vol. 22, no. 2, p. 123-127, 1986
- FOOD SCIENCE & TECHNOLOGY ABSTRACTS, no.80-03-P0603 (80015984); H.M. GHALEB: "Contribution to loss in weight of Domiaticheese during pickling. II. Cheese milk treatments. B. Use of pectin, gelatineand agar", & JOURNAL OF AGRICULTURAL RESEARCH, vol. 3, no. 2, p. 27-35, 1977
- FOOD SCIENCE AND TECHNOLOGY ABSTRACTS, no. 79-09-P1510 (79051912); W.M. ABOU-EL-ELLA et al.: "Studies on soft cheese with low fat and salt contents",&& MILCHWISSENSCHAFT, vol. 34, no.2, p. 89-90, 1979
- JOURNAL OF DAIRY SCIENCE, vol. 72, no. 7, juillet 1989, pages 1695-1700; R.L.OLSEN: "Effects of polysaccharides on rennet coagulation of skim milk proteins"

## Description

L'invention concerne un procédé de fabrication de fromage ou spécialité fromagère ainsi que le fromage ou spécialité fromagère obtenu par la mise en oeuvre du procédé.

Selon une tendance actuelle, on cherche à concevoir et réaliser des fromages ou spécialités fromagères maigres c'est-à-dire dont le taux de matière grasse, par rapport à l'extrait sec, est inférieur ou égal à 30 % et cela afin de répondre à l'attente des consommateurs pour des produits allégés en matières grasses.

On connaît aujourd'hui divers fromages ou spécialités fromagères répondant à ce critère d'être maigre ou allégé. Dans une première variante, le fromage ou spécialité fromagère a une pâte homogène et un caillé présure. Dans une seconde variante, le fromage ou spécialité fromagère a un caillé lactique ou mixte, un pâte non homogène et subit un affinage classique pouvant conduire à une protéolyse sous croûte. Mais un tel fromage ou spécialité fromagère selon cette seconde variante s'il présente l'avantage d'être à caillé lactique présente, précisément, le double inconvénient de n'être pas perçu, au goût, comme suffisamment homogène et d'être fortement évolutif et coulant, ce qui est inacceptable, par exemple, pour des produits présentés à la vente à la coupe. Par ailleurs, ce type de fromage ou spécialité fromagère subit deux phénomènes ou tendances ou a deux caractéristiques opposées ou antinomiques : l'affinage et la présence ainsi que la perception par le consommateur de l'hétérogénéité sous forme de grain ou module. Si l'affinage est léger, la consistance est plâtreuse, la perception d'hétérogénéité importante, la déglutition rendue de ce fait difficile. En revenche le coulant est évité. Si, au contraire l'affinage est poussé, l'homogénéité paraît meilleure mais, en revanche le fromage ou la spécialité fromagère est coulant.

Le problème de la perception d'homogénéité du fromage ou de la spécialité fromagère, de sa présence en bouche peut être atténué par un taux en matière grasse plus important mais alors le fromage ou la spécialité fromagère perd la qualité de maigre ou d'allégé ainsi qu'il est précisément recherché.

L'invention vise à surmonter ces problèmes. A cet effet elle propose un procédé de fabrication d'un fromage ou d'une spécialité fromagère maigre caractérisé par le fait qu'avant coagulation du lait ou rétentat laitier issu d'ultrafiltration on y ajoute et on y disperse dans la masse de façon aussi homogène que possible une solution de gélatine, à une température supérieure ou égale à 20°C, et on poursuit ensuite le processus de fabrication du fromage ou de la spécialité fromagère, la gélatine, ainsi mis en oeuvre ayant pour fonction du donner au consommateur une impression d'homogénéité et de fraîcheur de la pâte ainsi fabriquée. Selon une variante préférentielle, le procédé selon l'invention est mis en oeuvre avec une pâte molle, à caillé lactique, à croûte fleurie, maigre, ayant un taux de matière grasse, par rapport à l'extrait sec, inférieur ou égal à 50 %, légèrement affiné afin que le pH soit inférieur ou égal à 5 sur 3/4 environ de la masse de fromage ou spécialité fromagère.

Un des buts principaux de l'invention est donc de réaliser un fromage à pâte molle, lactique, à croûte fleurie, maigre qui ne soit pas trop présent en bouche pour le consommateur, donne au goût une impression d'homogénéité ainsi que de fraîcheur telle que celle donnée par un fromage frais, soit facilement tranchable sans couler de façon excessive, de manière à pouvoir être commodément présenté à la vente également à la coupe. DE plus, la gélatine limite l'exsudation du produit.

Ce but est atteint selon l'invention par adjonction de gélatine.

La littérature donne un certain nombre d'enseignements sur l'usage de la gélatine dans l'agro-alimentaire : le document EP 0033635 décrit la réalisation d'une crème fromagère de type fondu, utilisant la gélatine en sa qualité d'agent stabilisant. Le document FR 1225769 propose d'utiliser la gélatine associée à d'autre corps comme matière d'enrobage de produits en grains tels que riz, café, orge. Le document US 4197325 enseigne de réaliser des gelées. Le document US 4272557 décrit un dessert comprenant de la gélatine stable à basse température. Le document BE 511832 se rapporte à un enduit pour saucisson, salami ou autres comportant, entre autres produits, de la gélatine. Le document US 3669688 décrit une composition comestible stabilisante pouvant être employée pour le revêtement de gâteaux et comportant de la gélatine. Le document WO 8605363 décrit une composition élémentaire colorée pouvant contenir de la gélatine et susceptible de servir de décor. Le document JP 7927780 révèle l'usage de la gélatine pour une composition alimentaire à enrober en vue d'assurer une consistance convenable. Le document DE 653344 revendique l'application de gel sur un fromage frais, l'affinage ayant lieu en totalité après cet enrobage avec le gel. Le document DE 626383 décrit la réalisation d'une enveloppe de pectine sur un fromage fondu et met en évidence les inconvénients de l'emploi de la gélatine. Le document EP 86902849.8 concerne l'usage de la gélatine ou autre en surface d'un produit légèrement affiné.

Le document GB-A-925 031 concerne un procédé de fabrication d'un fromage de Neufchâtel c'est-à-dire frais, extra-gras ou gras ou crème. Dans ce document, du fait de l'utilisation d'un mélange extra-gras pour la fabrication du fromage crémeux, il n'est pas nécessaire d'utiliser une solution de gélatine pour fabriquer un fromage non coulant. En fait, ce document enseigne l'utilisation de gommes destinées à prevenir une perte excessive d'humidité durant le procédé de fabrication. La gomme est de préférence une gomme végétale. Ce document ne décrit pas l'utilisation d'une solution de gélatine pour aider à la stabilisation du fromage final et réduire le coulant ou la fluidité du produit.

Le document FSTA 80-03-p0603 concerne l'amélioration du rendement d'obtention de fromage durant le saumurage. Le lait est traité par une composition contenant de la pectine, de la gélatine ou d'agar avant la préparation du fromage.

Le document FSTA 79-09-p1510 concerne la préparation d'un fromage de type "KAREISH" comportant notamment une étape d'addtition de gélatine destinée à augmenter la teneur en humidité et en NaCl et à diminuer la teneur en matières grasses et l'acidité du fromage.

Par contre l'état de la technique n'a pas mis en évidence l'application de la gélatine en tant que facteur propre à donner à un fromage ou à une spécialité fromagère une impression d'homogénéité et de fraîcheur et cela tout spécialement dans le cas d'une pâte molle, à caillé lactique, à croûte fleurie, maigre, ayant un taux de matière grasse, par rapport à l'extrait sec, inférieur ou égal à 50 %, légèrement affiné afin que le pH soit inférieur ou égal à 5 environ sur 3/4 environ de la masse de fromage ou spécialité fromagère.

Le procédé comporte outre l'étape d'adjonction et de dispersion de la solution de gélatine, les étapes successives d'adjonction de ferments lactiques, de moulage, d'égouttage, de saumurage et d'affinage. Ces différentes étapes sont classiques en technique fromagère pour la fabrication de fromage ou de spécialité fromagère. Il n'est donc pas nécessaire de les décrire plus. Par contre, il doit être mis en évidence que l'étape d'adjonction selon l'invention s'inscrit dans le processus de fabrication d'un fromage ou d'une spécialité fromagère.

Préférentiellement, la solution de gélatine est une solution aqueuse ou dans un solvant convenable.

Selon une variante, préférentielle, le procédé est mis en oeuvre avec un caillé lactique ou mixte. On entend par fromages ou spécialités fromagères à caillé lactique ceux qui subissent une faible action présure et une forte acidification avant l'égouttage. On entend par fromages ou spécialités fromagères à caillé mixte ceux qui sont obtenus à partir d'un coagulum mixte ou, parfois, à tendance présure auquel cas une acidification notable a lieu en cours d'égouttage (exemple : camembert pasteurisé).

Selon une autre variante possible, le procédé est mis en oeuvre avec un caillé présure, les fromages ou spécialités fromagères de ce type étant ceux obtenus avec un lait faiblement ensemencé, l'acidéification intervenant de façon limitée et tardivement en fin d'égouttage (exemple : Cantal).

Le procédé selon l'invention peut être mis en oeuvre, préférentiellement avec un fromage ou une spécialité fromagère à pâte molle mais aussi, éventuellement, avec une pâte fraîche ou blanche, persillée ou encore un fromage ou spécialité fromagère de chèvre.

Egalement, préférentiellement, le procédé est mis en oeuvre avec un fromage ou spécialité fromagère à croûte fleurie lavée ou mixte.

Les notions ou concepts de "lactique", "présure", pâte "fraîche", "blanche", "molle", "persillée" et "croûte fleurie" sont en soi bien connues de l'homme du métier et ne nécessitent pas davantage d'explications.

Le procédé selon l'invention est mis en oeuvre pour un fromage ou spécialité fromagère maigre ayant un taux de matière grasse, par rapport à l'extrait sec, inférieur ou égal à 50 %. En effet, pour des fromages ou spécialités fromagères maigres ou allégés, la fonction de la gélatine en tant qu'agent apte à donner une impression d'homogénéité et au consommateur est particulièrement sensible surtout si simultanément l'affinage est léger ainsi qu'il est mentionné ci-dessous.

Egalement, le procédé comporte une étape d'affinage léger afin que le pH soit inférieur ou égal à 5 sur 3/4 environ de la masse de fromage ou spécialité fromagère. Un tel affinage léger doit être distingué d'un affinage extensif ou complet tel que celui mis en oeuvre dans le cas d'un fromage ou spécialité fromagère de type camembert. Les conditions (durée, température) d'un tel affinage léger peuvent faire l'objet de variantes selon le fromage ou spécialité fromagère fabriqué. Elles sont définies en fonction de l'effet souhaité c'est-à-dire un pH limité dans une partie substantielle de la masse de fromage ou spécialité fromagère et l'absence de protéolyse sous croûte.

La solution de gélatine peut être ajoutée et dispersée sur et dans le lait ou rétentat laitier issu d'ultrafiltration sensiblement en même temps temps que les ferments lactiques, à une température supérieure ou égale à 20° C de manière à être suffisament fluide et à ne pas former un gel.

Ainsi que cela résulte de ce qui précède, le procédé selon l'invention a été mis en oeuvre, avec d'excellents résultats d'essais dans le cas où, simultanément, on a une pâte molle, à caillé lactique, à croûte fleurie, maigre ayant un taux de matière grasse, par rapport à l'extrait sec, inférieur ou égal à 50 %, légèrement affiné afin que le pH soit inférieur ou égal à 5 sur environ 3/4 de la masse de fromage ou spécialité fromagère. Dans un tel cas l'usage de la gélatine en tant que additif a donné d'excellents résultats.

L'invention concerne aussi le fromage ou la spécialité fromagère obtenu par la mise en oeuvre du procédé.

## Revendications

1. Procédé de fabrication d'un fromage ou d'une spécialité fromagère dans lequel on met en oeuvre un fromage ou spécialité fromagère maigre ayant un taux de matière grasse par rapport à l'extrait sec inférieur ou égal à 50 % dans lequel avant coagulation du lait ou rétentat laitier issu d'ultrafiltration on ajoute et on disperse dans la masse de façon substantiellement homogène une solution de gélatine, à une température supérieure ou égale à 20°C, on poursuit ensuite le processus de fabrication de fromage ou de la spécialité fromagère, on réalise un affinage léger afin que le pH soit inférieur ou égal à 5 sur 3/4 environ de la masse de fromage ou spécialité fromagère.

2. Procédé selon la revendication 1, caractérisé en ce qu'il est mis en oeuvre avec une pâte molle, à caillé lactique, à croûte fleurie, maigre, ayant un taux de matière grasse, par rapport à l'extrait sec, inférieur ou égal à 50 %, légèrement affiné afin que le pH soit inférieur ou égal à 5 sur 3/4 environ de la masse de fromage ou spécialité fromagère ; et par le fait qu'avant coagulation du lait ou rétentat laitier issu d'ultrafiltration on ajoute et on disperse une solution de gélatine, à une température où cette solution ne forme pas un gel, et on poursuit ensuite le processus de fabrication du fromage ou de la spécialité fromagère.

3. Procédé selon la revendication 1 ou 2, caractérisé en ce que la solution de gélatine est ajoutée et dispersée dans le lait ou rétentat laitier sensiblement en même temps que des ferments lactiques.

4. Procédé selon l'une quelconque des revendications 1 à 3 caractérisé en ce qu'il comporte outre l'étape d'adjonction et de dispersion de la solution de gélatine, les étapes successives d'adjonction de ferments lactiques, de moulage, d'égouttage, de saumurage et d'affinage.

## Patentansprüche

1. Verfahren zum Herstellen von Käse oder einer Käsespezialität, nach welchem ein magerer Käse oder eine magere Käsespezialität mit einem Fettgehalt von weniger oder gleich 50 % gegenüber dem Trockenextrakt verwendet und vor dem Gerinnen der Milch oder des durch Ultrafilterung gewonnenen Milchretentates eine Gelatinelösung bei einer Temperatur über oder gleich 20 °C der Masse beigegeben und weitgehend einheitlich in ihr verteilt wird, wonach das Verfahren zur Herstellung von Käse oder einer Käsespezialität fortgesetzt und eine leichte Reifung herbeigeführt wird, um in etwa 3/4 der Masse des Käses oder der Käsespezialität einen pH-Wert kleiner oder gleich 5 zu erhalten.

2. Verfahren nach Patentanspruch 1, dadurch gekennzeichnet, daß es bei einem mageren Weichkäse mit Kasein und dünner Kruste sowie einem Fettgehalt von weniger oder gleich 50 % gegenüber dem Trockenextrakt erfolgt und eine leichte Reifung herbeigeführt wird, um einen pH-Wert kleiner oder gleich 5 in etwa 3/4 der Masse des Käses oder der Käsespezialität zu erhalten, sowie dadurch, daß vor dem Gerinnen der Milch oder des durch Ultrafilterung gewonnenen Milchretentates eine Gelatinelösung bei einer Temperatur, bei der die Lösung nicht geliert, der Masse beigegeben und in ihr verteilt wird, wonach das Verfahren zur Herstellung von Käse oder einer Käsespezialität fortgesetzt wird.

3. Verfahren nach Patentanspruch 1 oder 2, dadurch gekennzeichnet, daß die Gelatinelösung der Milch oder dem Milchretentat praktisch gleichzeitig mit den Milchfermenten beigegeben und darin verteilt wird.

4. Verfahren nach Patentanspruch 1 bis 3, dadurch gekennzeichnet, daß es neben dem Arbeitsschritt Zugeben und Verteilen der Gelatinelösung die aufeinanderfolgenden Arbeitsschritte Zugeben von Milchfermenten, Formen, Abtropfen, Salzen und Reifen beinhaltet.

## Claims

1. Method for manufacturing a cheese or cheese speciality, wherein a thin cheese or cheese speciality is used having a fat ratio with respect to the dry extract of less than or equal to 50% in which, prior to coagulation of the milk or milk residue derived from ultrafiltering, a gelatine solution is added and dispersed in a substantially homogeneous mass at a temperature exceeding or equal to 20°C, the process for manufacturing the cheese or cheese speciality being continued until a light maturing is obtained so that the pH is less than or equal to 5 as regards about 3/4 of the cheese or cheese speciality mass.

2. Method according to claim 1, wherein it is used with a thin soft lactic curdled paste with a crust having a fat ratio with respect to the dry extract of less than or equal to 50% and is slightly matured so that the pH is less than or equal to 5 concerning about 3/4 of the cheese or cheese speciality mass; and wherein, prior to coagulation of the milk or milk residue derived from ultrafiltering, a solution of gelatine is added and dispersed at a temperature where this solution does not form any gel, the process being continued for producing the chesse or cheese speciality.

3. Method according to claim 1 or 2, wherein the gelatine solution is added and dispersed in the milk or milk residue approximately at the same time as the lactic ferments.

4. Method according to any one of claims 1 to 3, wherein it comprises, in addition to the stage for adding and dispersing the gelatine solution, successive stages for adding lactic ferments, and for moulding, draining, brining and maturing.
